Europäisches Patentamt

**European Patent Office**

**Office européen des brevets**

(11) Veröffentlichungsnummer: **0 433 578 A1**

## EUROPÄISCHE PATENTANMELDUNG

(21) Anmeldenummer: **90118769.0**

(22) Anmeldetag: **29.09.90**

(51) Int. Cl.⁵: **B65G 13/071, B65G 39/09**

(30) Priorität: **20.12.89 DE 3942033**

(43) Veröffentlichungstag der Anmeldung:
**26.06.91 Patentblatt 91/26**

(84) Benannte Vertragsstaaten:
**AT DE ES FR GB IT SE**

(71) Anmelder: **Johann A. Krause Maschinenfabrik GmbH**
**Betonstrasse 31**
**W-2820 Bremen-Farge(DE)**

(72) Erfinder: **Schreier, Ulrich**
**Pumpenstrasse 6**
**W-2820 Bremen 70(DE)**

(74) Vertreter: **Möller, Friedrich, Dipl.-Ing. et al**
**Meissner, Bolte & Partner Anwaltssozietät**
**Hollerallee 73**
**W-2800 Bremen 1(DE)**

(54) **Friktionsrollenbahn.**

(57)
2.1. Friktionsrollenbahnen verfügen über eine Vielzahl von an länglichen Tragschienen (11) gelagerten Förderrollen (12). Angetrieben werden die Förderrollen (12) reibschlüssig. Bei bekannten Friktionsrollenbahnen dieser Art ist die Antriebs-(Reib-)Kraft abhängig vom Gewicht des auf den Förderrollen (12) zu transportierenden Gegenstandes. Des weiteren ist die Montage und Demontage der durch Wellenstummel (17) an den Tragschienen (11) gelagerten Förderrollen (12) sehr aufwendig.

2.2. Bei der erfindungsgemäßen Friktionsrollenbahn sind zum einen zur Lagerung der Wellenstummel (17) in den Tragschienen (11) dienende Lagersätze (31) von einer Hülse (32) umgeben, wodurch der Wellenstummel (17) und die Förderrolle (12) als Einheit in die Tragschiene (11) ein- und ausbaubar sind. Andererseits ist bei der erfindungsgemäßen Friktionsrollenbahn jeder Förderrolle (12) eine eigene Friktions kupplung (45) zugeordnet, durch die die Förderrollen (12) mit einer vom Gewicht der darauf zu transportierenden Gegenstände unabhängigen (Reib-)Kraft antreibbar sind.

3. Die erfindungsgemäße Friktionsrollenbahn eignet sich besonders zum Weitertransport von auf Werkstückträgern oder Paletten angeordneten Motoren, Getrieben oder dergleichen, an denen Montage- oder Bearbeitungsvorgänge durchgeführt werden sollen.

Fig. 3

## FRIKTIONSROLLENBAHN

Die Erfindung betrifft eine Friktionsrollenbahn gemäß dem Oberbegriff des Anspruchs 1 bzw. dem Oberbegriff des Anspruchs 7.

Friktionsrollenbahnen werden bevorzugt zum Transport einzelner Gegenstände in Fertigungsbetrieben eingesetzt. Dazu werden die Gegenstände vorzugsweise zu Montage- und Fertigungszwecken von den Friktionsrollenbahnen auf einer Fertigungsstrecke entlangbewegt.

Aus der DE-OS 30 17 942 ist eine Friktionsrollenbahn der gattungsbildenden Art bekannt, bei der an einem üblicherweise aus seitlichen Tragschienen bestehenden Gestell drehend antreibbare Wellenstummel mit jeweils einer Förder rolle angeordnet sind. Auf den durch Reibschluß von den Wellenstummeln angetriebenen Förderrollen werden die Gegenstände entlang der Fertigungsstraße bewegt. Dabei besteht die Besonderheit derartiger Friktionsrollenbahnen aufgrund des reibschlüssigen Antriebs der Förderrollen darin, daß bei einem Stau oder Anhalten der Gegenstände an einer entsprechenden Bearbeitungs- oder Montagestation die Wellenstummel weiterhin (permanent) angetrieben werden, während die Förderrollen mit den darauf (momentan) nicht weiterbewegten Gegenständen stillstehen.

Bei der bekannten Friktionsrollenbahn nach der DE-OS 30 17 942 erfolgt die Übertragung der Reibkraft auf die Förderrollen an einer zylindrischen Reibfläche zwischen der jeweiligen Förderrolle einerseits und einem unverdrehbar auf dem angetriebenen Wellenstummel angeordneten Gleitring andererseits. Damit hängt die vom Gleitring auf die Förderrolle zu übertragende Reibkraft, die proportional zur Antriebskraft der zu fördernden Gegenstände ist, vom Gewicht des jeweils auf der entsprechenden Förderrolle ruhenden Gegenstands ab. Diese gewichtsabhängige Antriebskraft ist vielfach unerwünscht.

Des weiteren ist bei der bekannten Friktionsrollenbahn jeder Wellenstummel mittels zweier Lager im Geste 11, nämlich der jeweiligen Tragschiene desselben, gelagert. Die Lager müssen beim Einsetzen der Achsstummel in die jeweilige Tragschiene einzeln montiert und an der Tragschiene festgesetzt werden. Diese Montage ist recht aufwendig, und zwar vor allem dann, wenn ein defekter Achsstummel bzw. eine defekte Förderrolle ausgetauscht werden sollen.

Der Erfindung liegt nun die Aufgabe zugrunde, die bekannte Friktionsrollenbahn dahingehend zu verbessern, daß die Förderrollen mit einer vom Gewicht des zu transportierenden Gegenstands unabhängigen Friktionskraft antreibbar sind und darüber hinaus eine leichte Montage und Demontage der Förderrollen mit ihren Wellenstummeln möglich ist.

Eine Friktionsrollenbahn zur Lösung dieser Aufgabe weist die Merkmale des Anspruchs 1 auf. Durch das Hüllorgan ist jeder Wellenstummel zusammen mit der Förderrolle und einem entsprechenden Lagersatz als vormontierte Einheit (Förderrolleneinheit) in das Gestell, nämlich die jeweilige Tragschiene, der Friktionsrollenbahn einsetzbar. Ebenso kann im Falle eines Fehlers die Förderrolleneinheit als Ganzes demontiert werden. Dadurch wird sowohl der Aufwand bei der Montage einer (neuen) Friktionsrollenbahn vereinfacht als auch eine Reparatur schadhaft gewordener (Einzel-)Teile der Förderrolleneinheit problemlos möglich.

Das Hüllorgan ist zweckmäßigerweise derart ausgebildet, daß es den gesamten Lagersatz, also die üblicherweise zwei Lager desselben, bei komplett montiertem Wellenstummel, insbesondere mit darauf angeordneter Förderrolle, in eine entsprechende Aufnahme des Gestells bzw. der Tragschiene eingesetzt werden kann, und zwar vorzugsweise durch seitliches Einschieben in die entsprechende Tragschiene. Nach einem weiteren Vorschlag der Erfindung sind die Lager, und zwar insbesondere ein Festlager, in dem als zylindrische Hülse ausgebildeten Hüllorgan axial unverschieblich vormontiert.

Eine Arretierung der gesamten Einheit aus Förderrolle, Wellenstummel, Lager und Hülse im Gestell (Tragschiene) erfolgt derart, daß die Hülse zumindest axial unverschieblich in der Aufnahme der jeweiligen Tragschiene gesichert wird. Vorzugsweise erfolgt zusätzlich zur axialen Festlegung der Hülse in der jeweiligen Tragschiene auch noch eine Verdrehsicherung desselben. Bei einer bevorzugten Ausführungsform der Erfindung erfolgt diese Sicherung durch ein einziges, lösbar mit der Tragschiene verbundenes Haltemittel. Die Montage bzw. Demontage der gesamten Förderrolleneinheit erfolgt so durch einfaches Herein- bzw. Herausschieben derselben (mit der Hülse) aus der Tragschiene und ein Festschrauben bzw. Lösen des Haltemittels an derselben. Diese Maßnahmen sind kurzfristig auch von unerfahrenen Monteuren durchführbar, da der demgegenüber komplexere Zusammenbau oder die Demontage der gesamten Förderrolleneinheit anderweitig, nämlich im Herstellerbetrieb der Friktionsrollenbahn, erfolgen kann. Auch wird die Lagerhaltung für Ersatzteile durch die erfindungsgemäße Ausbildung der Friktionsrollen erheblich vereinfacht, da nur noch komplette Förderrolleneinheiten als Ersatzteil bereitgehalten zu werden brauchen, also nicht mehr die vielfältigen Einzelteile der jeweiligen Förderrolleneinheiten.

Zur Lösung der der Erfindung zugrundeliegenden Aufgabe dient ferner eine Friktionsrollenbahn mit den Merkmalen des Anspruchs 7. Demnach ist jeder vom Wellenstummel antreibbaren Förderrolle eine unmittelbar mit derselben in Verbindung stehende Friktionskupplung zugeordnet. Durch diese ist die jeweilige Friktionsrolle vom Wellenstummel unabhängig vom Gewicht des zu transportierenden Gegenstands antreibbar, weil die Friktionskraft von der Einstellung der Friktionskupplung abhängig ist, und nicht - wie bei der bekannten Friktionsrollenbahn - von der Gewichtskraft des jeweiligen auf der Förderrolle sich befindenden Gegenstands. Dadurch ist die Antriebskraft des jeweils zu transportierenden Gegenstands exakt vorherbestimmbar, wobei auch leichtere Gegenstände zuverlässig mit der jeweils gewünschten Antriebskraft weitertransportierbar sind.

Eine besonders vorteilhafte Friktionsrollenbahn ergibt sich aus einer Kombination der Merkmale der Ansprüche 1 und 7 sowie gegebenenfalls einen oder auch mehrerer Unteransprüche.

Die Einstellung der Antriebskraft (Friktionskraft) der zu transportierenden Gegenstände erfolgt an der jeweiligen Friktionskupplung einerseits durch den Abstand der Kupplungsscheiben zueinander und andererseits - alternativ oder zusätzlich - durch Veränderung der Vorspannung der zwischen den Kupplungsscheiben angeordneten Federorganen. Dieses kann werksseitig nach entsprechenden Vorgaben bei der Montage der Förderrolleneinheit vorgenommen werden.

Aber auch an der fertig montierten Friktionsrollenbahn kann beispielsweise bei einer Umstellung auf andere zu fördernde Gegenstände oder eines während des Betriebs sich möglicherweise einstellenden Verschleißes problemlos ohne eine Demontage der Förderrolleneinheit eine Verstellung der Antriebskraft vorgenommen werden, und zwar mit einfachen Mitteln auch von nicht speziell ausgebildeten Personen.

Weitere Unteransprüche beziehen sich auf vorteilhafte Weiterbildungen der Friktionsrolleneinheit, insbesondere die Verstellung der Friktionskupplungen.

Bevorzugte Ausführungsbeispiele der Friktionsrollenbahnen werden nachfolgend anhand der Zeichnung näher erläutert. In dieser zeigen:

Fig. 1    eine Draufsicht auf einen Abschnitt einer Friktionsrollenbahn,

Fig. 2    einen vertikalen Querschnitt 11-11 durch die gesamte Friktionsrollenbahn,

Fig. 3    einen vergrößert dargestellten vertikalen Querschnitt III-III durch eine an einer Tragschiene montierte Förderrolleneinheit,

Fig. 4    eine vergrößert dargestellte Stirnansicht IV einer Friktionskupplung der Förderrolleneinheit, und

Fig. 5    eine alternative Ausführungsform der Förderrolleneinheit in einer Darstellung gemäß der Fig. 3.

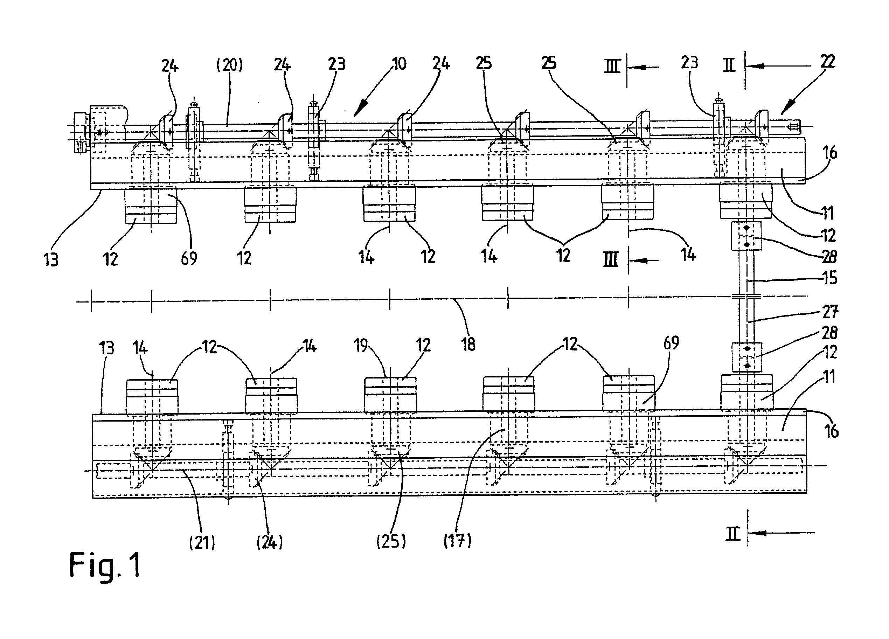

Die hier gezeigte Friktionsrollenbahn dient zur Bildung einer Förderstrecke, auf der nicht gezeigte Gegenstände, beispielsweise Transportpaletten mit Motorblöcken, zur Motorenmontage an einzelnen (Montage-)Stationen entlang transportierbar sind. Die Friktionsrollenbahn setzt sich zusammen aus einzelnen, längs der Förderstrecke aneinandergekuppelten Friktionsrollenbahnabschnitten 10, von denen hier nur einer dargestellt ist (Fig. 1).

Die Friktionsrollenbahn bzw. deren Friktionsrollenbahnabschnitte 10 verfügen über ein ortsfestes Gestell , das zwei mit Abstand zueinander parallel längs zur Förderstrecke verlaufende Tragschienen 11 aus vorzugsweise stranggepreßten Aluminium-Profilmaterial aufweist, die durch (nicht gezeigte) Querträger verbunden und gegebenenfalls auf (ebenfalls nicht dargestellten) Stützen angeordnet sind.

Jeder Tragschiene 11 ist eine größere Anzahl von drehend antreibbaren Förderrollen 12 zugeordnet. Diese sind mit gleichmäßigem Abstand längs der Förderstrecke hintereinanderliegend an den Tragschienen 11 gelagert, und zwar gegenüber einander zugerichteten, aufrechten Stirnflächen 13 der Tragschienen 11 vorstehend (Fig. 1). Die Förderrollen 12 liegen somit einander zugerichtet zwischen den parallelen Tragschienen 11, wobei die Anordnung der Förderrollen 12 im gezeigten Ausführungsbeispiel so getroffen ist, daß sich jeweils zwei an unterschiedlichen Tragschienen 11 gelagerte Förderrollen 12 auf einer gemeinsamen, quer zur Längsmittelachse 18 des Friktionsrollenbahnabschnitts 10 verlaufenden Drehachse 14 bzw. 15 gegenüber liegen (Fig. 1).

Die auf der Friktionsrollenbahn zu transportierenden Gegenstände (Transportpaletten mit darauf festgespannten Motorblöcken) werden demnach zwischen den parallelen Tragschienen 11 liegend durch die angetriebenen Förderrollen 12 in Richtung der Förderstrecke weitertransportiert. Zur seitlichen Führung der Gegenstände entlang der Förderstrecke sind gegenüber der Oberseite der Förderrollen 12 nach oben vorstehende Bereiche der Stirnflächen 13 der Tragschienen 11 im gezeigten Ausführungsbeispiel mit länglichen Anschlagleisten 16 versehen, die beispielsweise aus Kunststoff be stehen können und zusätzlich zum Schutz der Tragschienen - aber auch der zu fördernden Gegenstände - gegen Beschädigungen dienen.

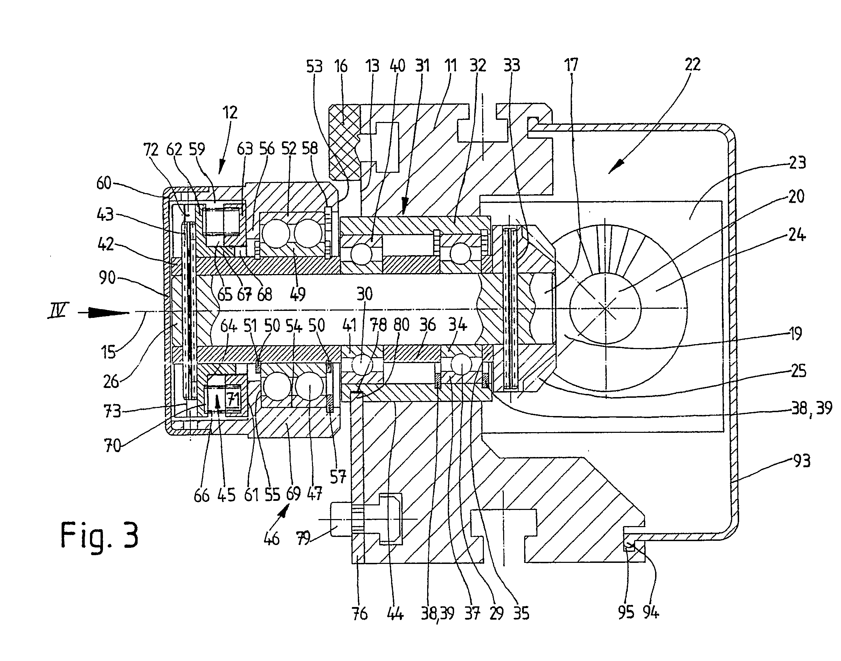

Jede einzelne Förderrolle 12 ist auf einem in der entsprechenden Tragschiene 11 drehbar gelagerten Wellenstummel 17 angeordnet. Diese Wellenstummel 17 liegen auf der jeweiligen Drehachse 14 bzw. 15 und stehen mit einem zur Längsmittelachse 18 der Friktionsrollenbahn bzw. dem Friktionsrollenbahnabschnitt 10 weisenden (inneren) Ende 19 gegenüber der jeweiligen Stirnfläche 13 der entsprechenden Tragschiene 11 vor (Fig. 1 und 3).

Sämtliche Wellenstummel 17 werden permanent angetrieben von entsprechenden Antriebswellen. Dazu ist jeder Tragschiene 11 des Friktionsrollenbahnabschnitts 10 ein Antriebswellenabschnitt 20 bzw. 21 zugeordnet. Diese Antriebswellenabschnitte 20 bzw. 21 verlaufen parallel zur Längsmittelachse 18, also längs zur Förderstrecke. Zugeordnet sind die Antriebswellenabschnitte 20, 21 den den Förderrollen 12 weggerichteten Außenseiten 22 der Tragschienen 11, indem sie an diesen in entsprechenden Lagerböcken 23 frei drehbar gelagert sind.

Im Bereich jeder Förderrolle 12 ist der entsprechende Antriebswellenabschnitt 20, 21 getrieblich mit jedem Wellenstummel 17 verbunden. Dazu sind im Bereich eines jeden Wellenstummels 17 axial unverdrehbar und unverschiebbar auf den Antriebswellenabschnitten 20, 21 entsprechende Kegelräder, nämlich Kegelzahnräder 24, befestigt. Korrespondierende Kegelräder, und zwar ebenfalls Kegelzahnräder 25, sind fest auf einem dem entsprechenden Antriebswellenabschnitt 20, 21 zugerichteten (äußeren) Ende 26 jedes Wellenstummels 17 angeordnet. Die Kegelzahnräder 25 aller Wellenstummel 17 kämmen auf diese Weise mit einem entsprechenden Kegelzahnrad 24 auf dem jeweiligen Antriebswellenabschnitt 20, 21 (Fig. 1), wodurch auch die Wellenstummel 17 von den Antriebswellenabschnitten 20, 21 ständig angetrieben werden. Anstelle der Kegelzahnräder 24, 25 können auch andere Winkeltriebe, beispielsweise Reibradantriebe, zum Antrieb der Wellenstummel 17 dienen.

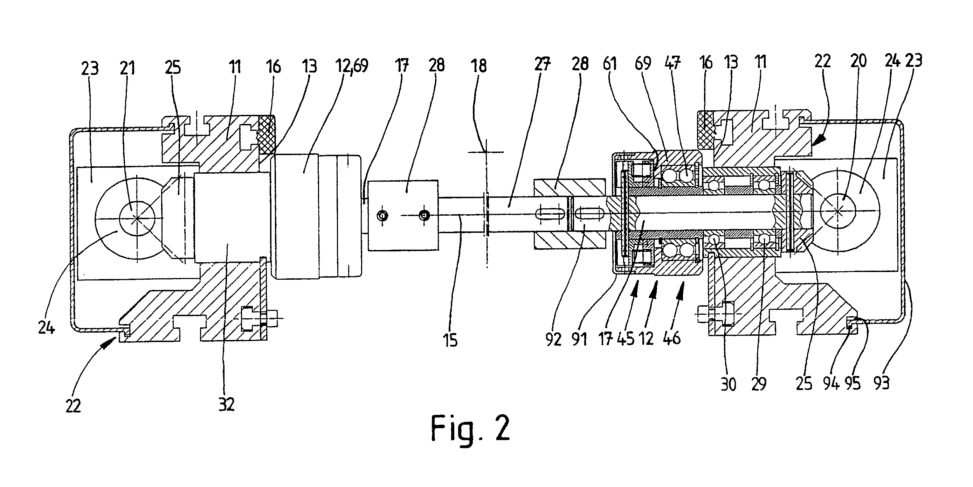

Beim gezeigten Ausführungsbeispiel erfolgt durch nicht dargestellte Antriebsmittel, beispielsweise einen Elektromotor, einen Hydraulikmotor oder dergleichen, ein Antrieb nur einer Antriebswelle, beispielsweise mit der durch den Antriebswellenabschnitt 20 gebildeten Antriebswelle. Demgegenüber wird die zweite Antriebswelle, nämlich der Antriebswellenabschnitt 21, vom Antriebswellenabschnitt 20 aus über eine Verbindungswelle 27 angetrieben. Diese Verbindungswelle 27 verbindet gegenüberliegende Wellenstummel 17 und liegt zusammen mit diesen auf der Drehachse 15 (Fig. 1 und 2). Die Verbindungswelle 27 ist zwischen (inneren) Enden 19 gegenüberliegender Wellenstummel 17 angeordnet und dabei mit den Wellenstummeln 17 formschlüssig verbunden durch zwei lösbare Wellenkupplungen 28 üblicher Bauart (Fig. 1 und 2). Es reicht aus, wenn eine derartige Verbindungswelle 27 zwischen den Antriebswellenabschnitten 20, 21 einem Friktionsrollenbahnabschnitt 10 der gesamten Friktionsrollenbahn zugeordnet ist. Doch ist es auch denkbar, mehreren Friktionsrollenbahnabschnitten 10 der gesamten Friktionsrollenbahn oder eventuell sogar jedem Friktionsrollenbahnabschnitt 10 eine Verbindungswelle 27 zuzuordnen.

In besonderer Weise erfolgt die (untereinander gleiche) Lagerung der Wellenstummel 17 in der entsprechenden Tragschiene 11. Diese Lagerung wird gebildet aus einem zwei mit Abstand zueinander angeordnete Lager 29, 30 aufweisenden Lagersatz 31. Dieser den jeweiligen Wellenstummel 17 aufnehmende Lagersatz 31 ist vollständig umgeben von einem Hüllorgan, das hier als eine zylindrische Hülse 32 ausgebildet ist.

Beide Lager 29, 30 des Lagersatzes 31 sind im gezeigten Ausführungsbeispiel als Wälzlager, nämlich Rillenkugellager, ausgebildet. Das hier dem formschlüssig durch einen Spannstift 33 im Bereich des äußeren Endes 26 auf dem Wellenstummel 17 befestigten Kegelzahnrad 25 zugerichtete Lager 29 ist als Festlager ausgebildet, indem sich der Innenring 34 über entsprechende Distanzringe 35, 36 einerseits am Kegelzahnrad 25 und andererseits am gegenüberliegenden Lager 30 abstützt, das als Loslager ausgebildet ist. Ein Außenring 37 des als Festlager ausgebildeten Lagers 29 ist durch zwei gegenüberliegende Sprengringe 38, die in entsprechende Nuten 39 der Hülse 32 eingreifen, in der Hülse 32 axial unverschieblich gesichert. Ein Außenring 40 des als Loslager ausgebildeten Lagers 30 ist axial verschieblich in der Hülse 32 gelagert; wohingegen ein Innenring 41 des Lagers 30 sich an einer Hülse 42 abstützt, die axial unverschieblich und unverdrehbar durch einen weiteren Spannstift 43 im Bereich des (inneren) Endes 19 auf dem Wellenstummel 17 befestigt ist (Fig. 3).

Die zylindrische Hülse 32 ist in einer korrespondierend ausgebildeten Aufnahme, nämlich einer konzentrisch zur Drehachse 14, 15 verlaufenden Durchgangsbohrung 44, in der jeweiligen Tragschiene 11 gelagert. Dazu sind die korrespondierenden Außendurchmesser der Hülse 32 einerseits und der Durchgangsbohrung 44 andererseits derart bemessen, daß diese größer sind als der Außenumfang des fest mit dem (äußeren) Ende 26 des Wellenstummels 17 verbundenen Kegelzahnrades 25 (Fig. 3). Auf diese Weise läßt sich jeder Wellenstummel 17 mit dem Lagersatz 31, der Hülse 32, dem Kegelzahnrad 25, der Förderrolle 12 und einer im folgenden näher erläuterten Friktionskupplung 45 als komplett montierte Förderrolleneinheit 46 seitlich (von innen nach außen) in die entsprechende Durchgangsbohrung 44 der Tragschienen 11 einsetzen, wobei das Kegelzahnrad 25 durch die jeweilige Durchgangsbohrung 44 hindurchgeschoben wird (Fig. 3).

Die zylindrische Hülse 32 ist längsverschieblich - und im gezeigten Ausführungsbeispiel auch unverdrehbar - in der Durchgangsbohrung 44 der Tragschiene 11 arretiert. Diese Arretierung wird gebildet durch eine lösbar durch eine Schraubverbindung 79 vor der Stirnfläche 13 der jeweilgen Tragschiene 11 befestigte Haltelasche 76 (Fig. 3). Ein freies (vorderes) Ende 80 der Haltelasche 76 greift dabei in eine Nut 78 in der Hülse 32 ein, die hier kreisabschnittartig ausgebildet ist und sich in einem gegenüber der Stirnfläche 13 der Tragschiene 11 vorstehenden Bereich der Hülse 32 befindet (Fig. 3). Alternativ ist es denkbar, die Hülse 32 mit einem entsprechenden Bund in Richtung zum Antriebswellenabschnitt 20 bzw. 21 hin in der Tragschiene 44 zu arretieren, während in der gegenüberliegenden Richtung eine Arretierung durch das Hineinragen des freies Endes 18 der Haltelasche 76 in den Bereich der Durchgangsbohrung 44 in der Tragschiene 11 zustande kommt.

Jede Förderrolle 12 besteht aus einem Rollenmantel 69 und einem Festlager 47. Letzteres dient zur unverschieblichen und frei drehbaren Lagerung des Rollenmantels 69 auf dem entsprechenden Wellenstummel 17.

Das Festlager 47 ist im gezeigten Ausführungsbeispiel wiederum als Wälzlager ausgebildet, nämlich als zweireihiges Rillenkugellager. Ein Innenring 49 dieses Festlagers 47 ist axial unverschiebbar auf der Hülse 42 gelagert, und zwar zwischen zwei gegenüberliegenden Sprengringen 50, die in entsprechende Nuten 51 der Hülse 42 eingreifen (Fig. 3). Ein Außenring 52 des Festlagers 47 ist ebenfalls axial unverschiebbar in einer von der Tragschiene 11 weisenden Stirnseite 53 der Förderrolle 12 ausgehenden, zylindrischen Ausnehmung 54 gelagert. Dabei stützt sich der Außenring 52 an einer die zylindrische Ausnehmung 54 innenseitig begrenzenden kreisringförmigen Anschlagfläche 55 ab, die gebildet wird durch eine etwa mittige, ringförmige Einschnürung 56 im Rollenmantel 69 der Förderrolle 12. An der zur Stirnfläche 13 der Tragschiene 11 gerichteten Seite ist der Außenring 52 des Festlagers 47 wiederum durch einen Sprengring 57 gehalten, der sich mit seinem Außenumfang in einer in der zylindrischen Ausnehmung 54 angeordneten Ringnut 58 abstützt (Fig. 3).

Eine weitere Besonderheit der Erfindung besteht darin, daß jeder Förderrolle 12 eine eigene Friktionskupplung 45 zugeordnet ist. Die Friktionskupplung 45 ist in einer zylindrischen Freimachung 59 im Rollenmantel 69 der Förderrolle 12 untergebracht. Diese Freimachung 59 geht aus von der der Tragschiene 11 gegenüberliegenden Stirnseite 60 des Rollenmantels 69 und endet vor der ringförmigen Einschnürung 56, die auf dieser Seite eine zur Friktionskupplung 45 weisende, kreisringförmige Reibfläche 61 am Rollenmantel 69 bildet (Fig. 3).

Gebildet ist die Friktionskupplung 45 aus zwei Kupplungsscheiben 62, 63, die mit Abstand zueinander auf der fest mit dem Wellenstummel 17 verbundenen Hülse 42 angeordnet sind, also wie die Förderrolle 12 konzentrisch zur Drehachse 14 bzw. 15 liegen (Fig. 3). Zwischen einander zugerichteten Stirnflächen 64, 65 der Kupplungsscheiben 62, 63 befinden sich vorgespannte Federorgane. Im gezeigten Ausführungsbeispiel handelt es sich hierbei um vier gleichmäßig auf den Umfang der Stirnflächen 64, 65 verteilt angeordnete Druckfedern 66. Alternativ können sowohl mehr als vier oder auch weniger Druckfedern 66 Verwendung finden.

Die Kupplungsscheiben 62, 63 sind relativ zueinander längs der Drehachse 14 bzw. 15 frei verschiebbar, hingegen im fertig montierten Zustand nicht zueinander verdrehbar. Dazu verfügt eine Kupplungsscheibe, und zwar hier die (äußere) Kupplungsscheibe 62, über zwei gegenüber ihrer zur (inneren) Kupplungsscheibe 63 gerichteten Stirnfläche 64 vorstehende Stege 67, die in korrespondierend ausgebildete Durchgangsnuten 68 in der (inneren) Kupplungsscheibe 63 teilweise formschlüssig eingreifen (Fig. 3).

Die (äußere) Kupplungsscheibe 62 ist durch den Spannstift 43 unverdrehbar und unverschiebbar auf dem Wellenstummel 17, nämlich der ebenfalls (durch den Spannstift 43) unverdrehbar und unverschiebbar mit dem Wellenstummel 17 verbundenen Hülse 42, gelagert. Auf diese Weise wird die (äußere) Kupplungsscheibe 62 ununterbrochen von dem ständig angetriebenen Wellenstummel 17 mitgenommen. Ebenso erfolgt durch die formschlüssige (unverdrehbare) Verbindung der beiden Kupplungsscheiben 62, 63 untereinander ein ständig drehendes Mitlaufen der (inneren) Kupplungsscheibe 63 mit dem Wellenstummel 17. Dabei wird durch die sich an der unverschiebbaren (äußeren) Kupplungsscheibe 62 abstützenden, vorgespannten Druckfedern 66 die axial verschiebliche (innere) Kupplungsscheibe 63 gegen die Reibfläche 61 des Rollenmantels 69 gedrückt. Aufgrund der hieraus resultierenden Reibkraft zwischen der (inneren) Kupplungsscheibe 63 und dem Rollenmantel 69 erfolgt eine reibschlüssige Mitnahme desselben zum Antrieb der Förderrolle 12.

Die Reibkraft zum Antrieb der Förderrolle 12 ist proportional zur Andrückkraft der (inneren) Kupplungsscheibe 63 an die Reibfläche 61 des Rollenmantels 69. Diese Andrückkraft ist verstellbar durch die Vorspannung der Druckfedern 66 zwischen den Kupplungsscheiben 62, 63. Diese ist erfindungsgemäß auf zweierlei Weise an der Friktionskupplung 45 einstellbar.

Zum einen ist die Vorspannung der Druckfedern 66 ohne eine Veränderung des Abstandes zwischen den zueinander gerichteten Stirnflächen 64, 65 der Kupplungsscheiben 62, 63 veränderbar, indem die Kupplungsscheiben 62, 63 in eine Relativposition zueinander gebracht werden, in der sich die der (äußeren) Kupplungsscheibe 62 zugerichteten Enden der vier Druckfedern 66 allesamt an der insofern glatten Stirnfläche 64 der (äußeren) Kupplungsscheibe 62 abstützen. In einer anderen (um 45° versetzten) Relativstellung der Kupplungsscheiben 62, 63 zueinander treten im gezeigten Ausführungsbeispiel die der (äußeren) Kupplungsscheibe 62 zuge richteten Enden zweier Druckfedern 66 in entsprechende (kurze) Sackbohrungen 70 in der Stirnfläche 64 der (äußeren) Kupplungsscheibe 62 ein (Fig. 3). Alternativ ist es denkbar, für alle vier Druckfedern 66 in der Stirnfläche 64 Sackbohrungen 70 vorzusehen.

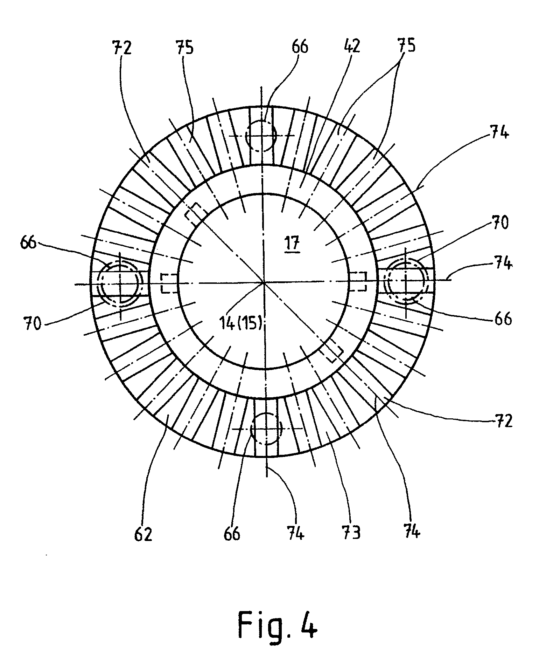

Um die Kupplungsscheiben 62, 63 in den beiden unterschiedlichen Relativpositionen zueinander verdrehsicher verbinden zu können, sind in der (inneren) Kupplungsscheibe 63 zwei Paare jeweils gegenüberliegender Durchgangsnuten 68 angeordnet, die zueinander um 45° versetzt sind (Fig. 4), wobei alternativ in jeweils ein Paar der Durchgangsnuten 68 die beiden Stege 67 an der äußeren Kupplungsscheibe 62 eingreifen. Schließlich sind alle vier Druckfedern 66 unabhängig von der Relativstellung der (äußeren) Kupplungsscheibe 62 zur (inneren) Kupplungsscheibe 63 mit entsprechenden Endbereichen in der (inneren) Kupplungsscheibe 63 gehalten, wozu letztere über vier gleich tiefe von der Stirnfläche 65 ausgehende Sackbohrungen 71 verfügt (Fig. 3).

Zum anderen ist die Vorspannung der Druckfedern 66 einstellbar durch eine Veränderung der Abstände der Kupplungsscheiben 62, 63 bzw. ihrer Stirnflächen 64, 65 zueinander. Um diese Verstellung durchführen zu können, verfügt die (äußere) Kupplungsscheibe 62 in ihrer außenliegenden Stirnfläche 73 über eine Mehrzahl unterschiedlich tiefer Nuten 72. Diese Nuten 72 sind korrespondierend zum Durchmesser des Spannstifts 43 ausgebildet, an dem sich die (äußere) Kupplungsscheibe 62 in jeweils (alternativ) einer der Nuten 72 abstützt (Fig. 3 und 4). Im gezeigten Ausführungsbeispiel ist die Stirnfläche 73 mit zwölf radial gerichteten Nuten 72 versehen, deren Mittelachsen 74 diametral (quer) durch die jeweilige Drehachse 14, 15 des entsprechenden Wellenstummels 17 verlaufen (Fig. 4). Jede Nut 72 wird gebildet durch zwei gegenüberliegende Nutabschnitte 75 auf der kreisringförmigen Stirnfläche 73 der (äußeren) Kupplungsscheibe 62, indem zwei korrespondierende Nutabschnitte 75 auf einer gemeinsamen Mittelachse 74 liegen. Durch die zwölf Nuten 72 bzw. vierundzwanzig Nutabschnitte 75, die jeweils unterschiedlich tief in die Stirnfläche 73 der (äußeren) Kupplungsscheibe 62 eingearbeitet sind, können die Kupplungsscheiben 62, 63 auf zwölf unterschiedliche Abstände zueinander (Ziffern A bis L in der Fig. 4) gebracht werden, indem beide Kupplungsscheiben 62, 63 zusammen mit den Druckfedern 66 auf der Hülse 42 gegenüber dem Spannstift 43 verdreht werden. Die Verstellung von der einen Stufe zur nächstfolgenden Stufe erfolgt demnach durch eine Verdrehung der gesamten Friktionskupplung 45 um 15°. Diese Verstellung kann zum einen dadurch erfolgen, daß die (äußere) Kupplungsscheibe 62 gegen die Druckkraft der Druckfedern 66 so weit gegen die (innere) Kupplungsscheibe 63 gedrückt wird, daß der Spannstift 43 außer Eingriff zur jeweiligen Nut 72 kommt und dadurch die Friktionskupplung 45 so weit auf der Hülse 42 verdrehbar ist, daß der Spannstift 43 einer anderen (tieferen oder flacheren) Nut 72 gegenüberliegt. Durch Loslassen der (äußeren) Kupplungsscheibe 62 gelangt dann wieder der Spannstift 43 in die entsprechende Nut 72. Andererseits ist es auch denkbar, die Verstellung dadurch vorzunehmen, daß der Spannstift 43 entfernt und nach einer entsprechenden Verdrehung der Friktionskupplung 45 wieder durch den Wellenstummel 17 und die Hülse 42 getrieben wird zum Eingriff in die entsprechende neu ausgewählte Nut 72.

Die Friktionskupplung 45 und das (innere) Ende 19 des Wellenstummels 17 sind im gezeigten Ausführungsbeispiel durch eine lösbar auf den zur Stirnseite 60 gerichteten Bereich des Rollenmantels 69 aufgesetzte Kappe 90 abgedeckt (Fig. 3). Dort, wo zwischen zwei sich gegenüberliegenden Wellenstummeln 17 die Verbindungswelle 27 angeordnet ist, findet eine Kappe 91 mit einer mittigen Bohrung zum Durchtritt eines verlängerten Endes 92 des Wellenstummels 17 Verwendung (Fig. 2).

Die Antriebswellenabschnitte 20, 21 mit den Lagerböcken 23 und den Kegelzahnrädern 24 sind durch einen Deckel 94 verschlossen. Dieser ist als längliches U-Profil ausgebildet, das an der Außenseite 22 jeder Tragschiene 11 entlangläuft (Fig. 2 und 3). Verbunden ist der Deckel 93 mit der jeweiligen Tragschiene 11 durch an seinen gegenüberliegenden freien Enden angeordnete Wülste 94, die in korrespondierend ausgebildete Profilnuten 95 in den Tragschienen 11 eingreifen (Fig. 2 und 3).

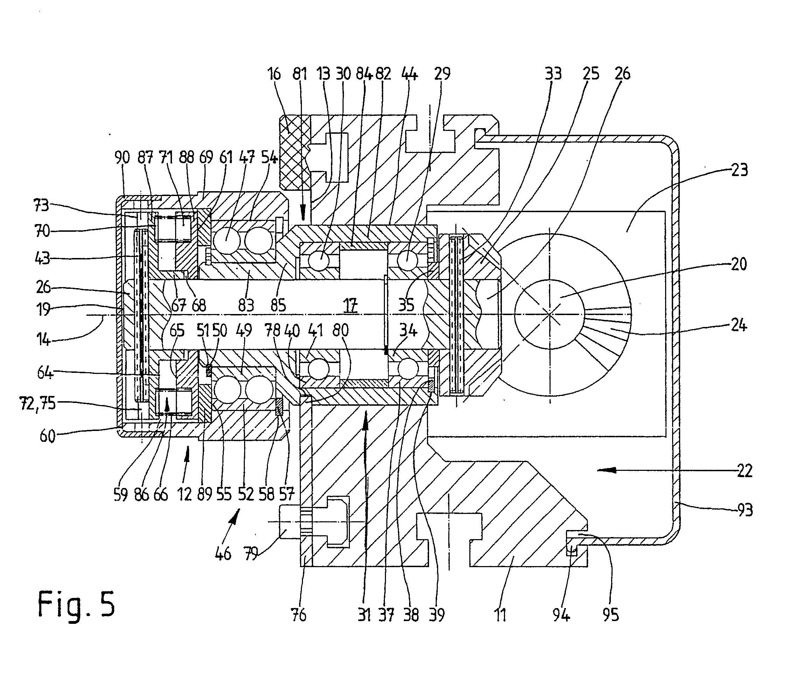

Eine alternative Lagerung der Förderrolle 12 verfügt über eine im Durchmesser abgesetzte Hülse 81, die einen größeren Hülsenabschnitt 82 und einen damit einstückig verbundenen kleineren Hülsenabschnitt 83 aufweist. Der erstgenannte größere Hülsenabschnitt 82 umgibt die Lager 29, 30, während der darin anschließende, auf dem Wellenstummel 17 sitzende kleinere Hülsenabschnitt 83 zur Aufnahme des Festlagers 47 (zweireihiges Rillenkugellager) für die Lagerung des Rollenmantels 69 dient (Fig. 5). Auch bei diesem Ausführungsbeispiel ist wiederum das dem Kegelzahnrad 25 zugerichtete Lager 29 als Festlager ausgebildet, wohingegen das zweite Lager 30 das Loslager bildet, das in diesem Ausführungsbeispiel nur am Außenring 40 festgesetzt ist, und zwar zwischen einer sich am Außenring 37 des Lagers 29 abstützenden Distanzhülse 84 und einem kreisringförmigen Übergang 85 zwischen der im großen Hülsenabschnitt 82 und dem kleinen Hülsenabschnitt 83 der Hülse 81 (Fig. 5).

Schließlich endet beim gezeigten Ausführungsbeispiel der kleine Hülsenabschnitt 83 der Hülse 81 unmittelbar hinter dem zweireihigen Rillenkugellager 48, so daß die Friktionskupplung 86 mit ihren Kupplungsscheiben 87, 88 unmittelbar unverdrehbar, aber axial verschiebbar auf dem (inneren) Ende des Wellenstummels 17 gelagert ist (Fig. 5).

Die Reibfläche 61 für die (innere) Kupplungsscheibe 88 ist im gezeigten Ausführungsbeispiel gebildet durch einen (separaten) Reibring 89, der in den Rollenmantel 69 eingesetzt ist, und zwar vorzugsweise unverdrehbar (Fig. 5). Der Reibring 89 kann - falls er sich abgenutzt haben sollte - durch seine Ausbildung als separates Teil leicht ausgewechselt werden. Darüber hinaus ist es aufgrund der Zuordnung der Reibfläche 61 zum separaten Reibring 89 möglich, die Reibfläche 61 mit gezielt ausgewählten Reibeigenschaften zu versehen, indem für den Reibring 89 ein anderes Material als für den Rollenmantel 69 gewählt wird.

Im übrigen ist die Förderrolle 12 des aus der Fig. 5 hervorgehenden Ausführungsbeispiels ähnlich zum ersten Ausführungsbeispiel (Fig. 1 bis 4) ausgebildet. Das gilt insbesondere hinsichtlich der Funktion und der Verstellmöglichkeit der Friktionskupplung 86, die insofern der Friktionskupplung 45 des ersten Ausführungsbeispiels entspricht, auf das Bezug genommen wird.

## Ansprüche

1. Friktionsrollenbahn mit einer Mehrzahl von Förderrollen (12), die drehend antreibbar auf mit mindestens einem Lagersatz (31) in einem gemeinsamen Gestell gelagerten Wellenstummel (17) angeordnet sind, **dadurch gekennzeichnet,** daß jeder Lagersatz (31) von wenigstens einem Hüllorgan (Hülse 32, 81) umgeben ist, mit dem jeder Wellenstummel (17) zusammen mit der Förderrolle (12) und dem Lagersatz (31) als Einheit in dem Gestell angeordnet ist.

2. Friktionsrollenbahn nach Anspruch 1, dadurch gekennzeichnet, daß jeder Lagersatz (31) zwei mit Abstand zueinander angeordnete Lager (29, 30) aufweist, die gemeinsam vom Hüllorgan (Hülse 32, 81) umgeben sind, das in einer korrespondierend zu seinen Außenabmessungen ausgebildeten Aufnahme (Durchgangsbohrung 44) in das Gestell einsetzbar ist.

3. Friktionsrollenbahn nach Anspruch 2, gekennzeichnet durch derart ausgebildete Außenabmessungen des Hüllorgans (Hülse 32, 81), daß dieses komplett mit wenigstens den (montierten) Lagern (29, 30) dem Wellenstummel (17) und der Förderrolle (12) als Förderrolleneinheit (46) seitlich durch eine Durchgangsbohrung (44) in das Gestell einschiebbar ist.

4. Friktionsrollenbahn nach einem oder mehreren der Ansprüche 1 bis 3, dadurch gekennzeichnet, daß das Hüllorgan (Hülse 32, 81) durch wenigstens ein Haltemittel (Haltelasche 76) im Gestell arretierbar ist, und das Haltemittel vorzugsweise als eine lösbar mit dem Gestell verbundene Haltelasche (76) ausgebildet ist, das zumindest teilweise in eine entsprechende Ausnehmung (Nut 78) im Hüllorgan (Hülse 32, 81) formschlüssig eingreift.

5. Friktionsrollenbahn nach Anspruch 1 sowie einem oder mehreren der weiteren Ansprüche, dadurch gekennzeichnet, daß auf einem der Förderrolle (12) gegenüberliegenden (äußeren) Ende (26) des jeweiligen Wellenstummels (17) ein Antriebsrad (Kegelzahnrad 25) angeordnet ist, das in seinem Durchmesser kleiner als das den Lagersatz (31) umgebende Hüllorgan (Hülse 32, 81) auf dem Wellenstummel (17) ausgebildet ist.

6. Friktionsrollenbahn nach Anspruch 1 sowie einem oder mehreren der weiteren Ansprüche, dadurch gekennzeichnet, daß das Hüllorgan als eine zylindrische Hülse (32, 81) ausgebildet ist, die in länglichen Tragschienen (11) des Gestells gelagert ist.

7. Friktionsrollenbahn mit einer Mehrzahl von Förderrollen (12), die auf jeweils einem in einem gemeinsamen Gestell drehend antreibbaren geordneten Wellenstummel (17) gelagert sind, insbesondere nach einem oder mehreren der Ansprüche 1 bis 6, dadurch gekennzeichnet, daß auf dem Wellenstummel (17) eine mit der jeweiligen Förderrolle (12) in unmittelbarer Verbindung stehende Friktionskupplung (45, 86) angeordnet ist zur Mitnahme der Förderrollen (12) auf dem jeweils drehend angetriebenen Wellenstummel (17).

8. Friktionsrollenbahn nach Anspruch 7, dadurch gekennzeichnet, daß jeder Förderrolle (12) von einer Stirnfläche (73) her eine Friktionskupplung (45, 86) zugeordnet ist.

9. Friktionsrollenbahn nach Anspruch 7 oder 8, dadurch gekennzeichnet, daß durch reibschlüssige Anlage der Friktionskupplung (45, 86) an einer Reibfläche (61) eines Rollenmantels (69) jede Förderrolle (12) durch Reibschluß antreibbar ist, wobei die Friktionskupplung (45, 86) vorzugsweise in dem Rollenmantel (69) angeordnet ist.

10. Friktionsrollenbahn nach Anspruch 7 sowie einem oder mehreren der weiteren Ansprüche, dadurch gekennzeichnet, daß die Andrückkraft der jeweiligen Friktionskupplung (45, 86) an die Reibfläche (61) der jeweiligen Förderrolle (12) veränderlich ist, vorzugsweise stufenweise.

11. Friktionsrollenbahn nach Anspruch 7 sowie einem oder mehreren der weiteren Ansprüche, dadurch gekennzeichnet, daß die Friktionskupplung (45, 86) aus zwei axial verschieblich, aber unverdrehbar, auf dem vom Antriebsrad (Kegelzahnrad 25) weggerichteten (inneren) Ende (19) des Wellenstummels (17) gelagerten Kupplungsscheiben (62, 63; 87, 88) gebildet ist, die zwischen ihren zueinander gerichteten Stirnflächen (64, 65) Federorgane (Druckfedern 66) aufweisen und sich mit ihren außenliegenden Stirnflächen einerseits an der Reibfläche (61) des Rollenmantels (69) der jeweiligen Förderrolle (12) und andererseits an einem fest mit dem Wellenstummel (17) verbundenen Anschlagmittel (Spannstift 43) abstützen.

12. Friktionsrollenbahn nach Anspruch 10 oder 11, dadurch gekennzeichnet, daß die reibschlüssige Antriebskraft der Förderrollen (12) mindestens durch Veränderung des Abstandes zwischen den jeweiligen Kupplungsscheiben (62, 63; 87, 88) der entsprechenden Friktionskupplung (45, 86) einstellbar ist.

13. Friktionsrollenbahn nach Anspruch 12, dadurch gekennzeichnet, daß der Abstand der Kupplungsscheiben (62, 63; 87, 88) zueinander durch eine Änderung der Relativlage der sich am Anschlagmittel (Spannstift 43) abstützenden Kupplungsscheibe (62 bzw. 87) zum Anschlagmittel (Spannstift 43) veränderbar ist.

14. Friktionsrollenbahn nach Anspruch 13, dadurch gekennzeichnet, daß die dem Anschlagmittel (Spannstift 43) zugerichtete Rückseite der entsprechenden Kupplungsscheibe (62; 87) mehrere unterschiedlich tiefe Nuten (72) aufweist, die alternativ in Eingriff mit dem Anschlagmittel (Spannstift 43) bringbar sind, vorzugsweise durch Verdrehung der gesamten Friktionskupplung (45, 86) gegenüber dem Anschlagmittel (Spannstift 43).

15. Friktionsrollenbahn nach Anspruch 10 sowie einem oder mehreren der weiteren Ansprüche, dadurch gekennzeichnet, daß mindestens durch eine Änderung der Vorspannung der Federorgane (Druckfedern 66) zwischen den Kupplungsscheiben (62, 63 bzw. 87, 88) bei gleichbleibendem Abstand der Kupplungsscheiben (62, 63 bzw. 87, 88) die Andrückkraft der jeweiligen Friktionskupplung (45, 86) an die Reibfläche (61) des Rollenmantels (69) veränderbar ist.

16. Friktionsrollenbahn nach Anspruch 15, dadurch gekennzeichnet, daß in mindestens einer der zueinander gerichteten Stirnflächen (64, 65) der Kupplungsscheiben (62, 63; 87, 88) Vertiefungen (Sackbohrungen 70) angeordnet sind, in die mindestens einige der Federorgane (Druckfedern 66) zwischen in entsprechende Relativstellungen zueinander gebrachte Kupplungsscheiben (62, 63; 87, 88) teilweise hineinragen, während die Federorgane in einer anderen Relativposition der Kupplungsscheiben (62, 63; 87, 88) zueinander sich außerhalb der Vertiefungen (Sachbohrungen 70) an glatten Bereichen der Stirnflächen (64) der entsprechenden Kupplungsscheibe (62; 87) abstützen.

17. Friktionsrollenbahn nach Anspruch 16, gekennzeichnet durch Gruppen unterschiedlich tiefer Ausnehmungen (Sackbohrungen 70) in wenigstens einer Kupplungsscheibe (62; 87) der Friktionskupplung (45; 86).

18. Friktionsrollenbahn nach Anspruch 11 sowie einem oder mehreren der weiteren Ansprüche, dadurch gekennzeichnet, daß die Kupplungsscheiben (62, 63; 87, 88) in mehreren unterschiedlichen Relativstellungen zueinander gegeneinander unverdrehbar arretierbar sind.

19. Friktionsrollenbahn nach Anspruch 18, dadurch gekennzeichnet, daß vorzugsweise eine Kupplungsscheibe (62, 87) mindestens einen vorstehenden Steg (67) aufweist, der in mindestens eine korrespondierende Durchgangsnut (68) in der anderen Kupplungsscheibe (63; 80) längsverschieblich mit Formschluß eingreift, und vorzugsweise eine Kupplungsscheibe (63; 88) ein Mehrfaches an Durchgangsnuten (68) aufweist als Stege (67) an der gegenüberliegenden Kupplungsscheibe (62; 87) angeordnet sind.

Fig.1

EP 0 433 578 A1

Fig. 2

Fig. 3

Fig. 4

Fig. 5

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| | **EINSCHLÄGIGE DOKUMENTE** | | |
| X | US - A - 4 406 360 (SMITH) * Fig. 1 * | 1,6,7,8 | B 65 G 13/071 B 65 G 39/09 |
| X | AT - B - 331 183 (MASYC) * Fig. 7,8 * | 1,6 | |
| X | AT - B - 237 516 (MANNESMANN) * Anspruch 1 * | 1 | |
| X | GB - A - 1 450 952 (BROCKWAY) * Fig. 3 * | 1,6 | |
| X | DE - A1 - 3 408 125 (BLEICHERT) * Fig. 1 * | 7,8,10 | |
| D,X | DE - A1 - 3 017 942 (KRAUSE) * Anspruch 1; Fig. 1 * | 7,9 | RECHERCHIERTE SACHGEBIETE (Int Cl⁵) |
| X | EP - A1 - 0 103 672 (KRAUSE) * Zusammenfassung * | 7,9 | B 65 G |
| X | DE - A1 - 3 222 936 (C + S) * Fig. 2 * | 7,10,11 | |
| X | US - A - 4 706 801 (VESSEY) * Fig. 2; Zusammenfassung * | 7,10 | |

Der vorliegende Recherchenbericht wurde für alle Patentansprüche erstellt

| Recherchenort WIEN | Abschlußdatum der Recherche 25-01-1991 | Prüfer BAUMGARTNER |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82